# EUROPEAN PATENT APPLICATION

(11) **EP 4 800 234 A1**
(43) Date of publication of application: **02.09.2026**
(21) Application number: 24882023.5
(22) Date of filing: 30.08.2024
(51) Int. Cl.: F02D 11/10, B62K 23/04, F02D 9/02, F02D 11/02, G01B 7/30

(54) **THROTTLE DEVICE**

(30) Priority: 27.10.2023 JP 2023185096; 27.10.2023 JP 2023185097
(71) Applicant: Asahi Denso Co., Ltd., Shizuoka 434-0046 (JP)
(72) Inventor: KUMAZAWA, Takeo, Hamamatsu-shi, Shizuoka 434-0046 (JP); ISHIBASHI, Ryuki, Hamamatsu-shi, Shizuoka 434-0046 (JP)
(74) Representative: Cohausz & Florack
(86) International application number: PCT/JP2024/031330
(87) International publication number: WO 2025/088906

(57) **Abstract**

Provided is a throttle device that, even when a magnet is brought close from the outside, can suppress an influence on magnetism of a magnet that cooperates with a throttle grip, and can reduce manufacturing costs for magnetic shielding. The throttle device includes an interlocking member (2) that rotates in conjunction with a throttle grip (G), a rotating member (3) that rotates together with a magnet (m), a magnetic sensor (5) that detects a magnetic change of the magnet (m) associated with the rotation of the rotating member (3) to detect a rotation angle of the rotating member (3), a case member (1) that rotatably holds the interlocking member (2) and the rotating member (3), and a magnetic shielding member (12) made of a magnetic material, located around the magnet (m) and the magnetic sensor (5), and capable of shielding against external magnetism. The magnetic shielding member (12) has a cylindrical lateral part (12a) that is open at both ends and laterally surrounds the magnet (m) and the magnetic sensor (5), and a plate-shaped bottom part (12b) that closes at least one open end of the lateral part (12a).

## Description

### Technical Field

The present invention relates to a throttle device configured to control a drive source of a vehicle based on a rotation operation angle of a throttle grip.

### Background Art

In recent motorcycles, a configuration has become widespread in which a rotation operation angle of a throttle grip is electrically detected by a sensor and the detected value is sent as an electrical signal to an electronic control device or the like installed on the motorcycle (see, for example, PTL 1). The electronic control device then performs a predetermined calculation based on the detected signal, and controls an ignition timing of an engine or opening and closing of a throttle valve based on the calculation result.

Such a conventional throttle device includes an interlocking member that rotates in conjunction with the throttle grip, a rotating member on which a magnet is mounted and that rotates together with the magnet according to a rotation angle of the interlocking member, and detection means configured to detect a magnetic change of the magnet associated with the rotation of the rotating member to detect a rotation angle of the rotating member, and includes a magnetic shielding member for shielding against external magnetism.

### Citation List

### Patent Literature

PTL 1: Japanese Unexamined Patent Application Publication No. 2015-96345

### Summary of Invention

### Technical Problem

However, in the above-described conventional throttle device, since the magnetic shielding member is constituted of a cylindrical member with a bottom, there are problems that a deep drawing process is required and manufacturing costs are high. In particular, the magnetic shielding member in the conventional throttle device requires a small-diameter cylindrical member with a bottom and a large-diameter cylindrical member with a bottom, and therefore the deep drawing process is required to obtain each of these members.

The present invention has been made in view of the above circumstances, and an object of the present invention is to provide a throttle device that, even when a magnet is brought close from the outside, can suppress an influence on magnetism of a magnet that cooperates with a throttle grip, and can reduce manufacturing costs for magnetic shielding.

### Solution to Problem

The invention according to claim 1 is characterized in that a throttle device includes operation means capable of throttle operation, an interlocking member that rotates in conjunction with the operation means, a rotating member on which a magnet is mounted and that rotates together with the magnet in accordance with a rotation angle of the interlocking member, detection means configured to detect a magnetic change of the magnet associated with the rotation of the rotating member to detect a rotation angle of the rotating member, a case member that rotatably holds the interlocking member and the rotating member, and a magnetic shielding member made of a magnetic material, located around the magnet and the detection means, and capable of shielding against external magnetism, the throttle device being configured to detect an operation amount of the operation means based on the rotation angle of the rotating member detected by the detection means, and control a drive source of a vehicle, and the magnetic shielding member has a cylindrical lateral part that is open at both ends and laterally surrounds the magnet and the detection means, and a plate-shaped bottom part that closes at least one open end of the lateral part.

The invention according to claim 2 is characterized in that, in the throttle device according to claim 1, the case member includes a first housing portion on which the interlocking member is rotatably mounted, a second housing portion on which the rotating member is rotatably mounted, and a third housing portion on which the detection means is mounted, and a fitting portion configured to allow the lateral part of the magnetic shielding member to be fitted thereinto is formed at a position lateral to the third housing portion.

The invention according to claim 3 is characterized in that, in the throttle device according to claim 2, the case member includes a fourth housing portion formed continuously with the third housing portion, a circuit board on which the detection means is formed is mounted across the third housing portion and the fourth housing portion, and a connection terminal is formed in a section of the circuit board located in the fourth housing portion.

The invention according to claim 4 is characterized in that, in the throttle device according to claim 3, the lateral part of the magnetic shielding member is made of a cylindrical member with a cutout formed in part of a lateral side thereof, and the cutout is located at a boundary between the third housing portion and the fourth housing portion in a state where the lateral part is fitted into the fitting portion.

The invention according to claim 5 is characterized in that, in the throttle device according to claim 1, the rotating member includes a gear portion having a gear that meshes with the interlocking member, and a cylindrical portion extending in a cylindrical shape from the gear portion, and the magnet is mounted on an end portion of the cylindrical portion.

The invention according to claim 6 is characterized in that, in the throttle device according to claim 1, the throttle device includes a cover member mounted on the case member to cover the interlocking member and the rotating member, and the cover member is made of a magnetic material.

The invention according to claim 7 is characterized in that, in the throttle device according to claim 1, the throttle device includes a cover member mounted on the case member to cover the interlocking member and the rotating member, and a backlash spring that applies a urging force in a rotation direction of the rotating member to reduce backlash between the interlocking member and the rotating member, and the backlash spring is constituted of a torsion spring mounted on the rotating member, and has one end retained by the rotating member and another end extending to an outside of the cover member and retained while being subjected to a torsional action.

The invention according to claim 8 is characterized in that, in the throttle device according to claim 7, the throttle device includes an arc-shaped cutout portion that is formed in the cover member and allows for movement of the other end of the backlash spring when the torsional action is applied to the other end, and a retaining member that is mounted on the outside of the cover member, moves the other end of the backlash spring to apply the torsional action, and retains the other end of the backlash spring to which the torsional action is applied.

The invention according to claim 9 is characterized in that, in the throttle device according to claim 8, the retaining member is fixed in a state where the retaining member applies a urging force to the backlash spring by rotating about a shaft member which is a rotating shaft of the rotating member while retaining the other end of the backlash spring.

The invention according to claim 10 is characterized in that, in the throttle device according to claim 7, the rotating member includes a gear portion having a gear that meshes with a gear formed in the interlocking member, and a cylindrical portion extending in a cylindrical shape from the gear portion, the magnet is mounted on an end portion of the cylindrical portion, and a spring mounting recess portion that accommodates the backlash spring is formed from a side surface of the gear portion toward the cylindrical portion.

### Advantageous Effects of Invention

According to the invention of claim 1, the magnetic shielding member has the cylindrical lateral part that is open at both ends and laterally surrounds the magnet and the detection means, and the plate-shaped bottom part that closes at least one open end of the lateral part. Therefore, even when a magnet is brought close from the outside, it is possible to suppress an influence on magnetism of the magnet that cooperates with the operation means, and it is possible to reduce manufacturing costs for magnetic shielding.

According to the invention of claim 2, the case member includes the first housing portion on which the interlocking member is rotatably mounted, the second housing portion on which the rotating member is rotatably mounted, and the third housing portion on which the detection means is mounted, and the fitting portion configured to allow the lateral part of the magnetic shielding member to be fitted thereinto is formed at the position lateral to the third housing portion. Therefore, it is possible to improve each of positioning accuracy between the detection means and the lateral part of the magnetic shielding member, and positioning accuracy between the detection means and the magnet of the rotating member.

According to the invention of claim 3, the case member includes the fourth housing portion formed continuously with the third housing portion, the circuit board on which the detection means is formed is mounted across the third housing portion and the fourth housing portion, and the connection terminal is formed in the section of the circuit board located in the fourth housing portion. Therefore, the circuit board can be mounted on the case member while avoiding interference with the magnetic shielding member.

According to the invention of claim 4, the lateral part of the magnetic shielding member is made of the cylindrical member with the cutout formed in part of the lateral side thereof, and the cutout is located at the boundary between the third housing portion and the fourth housing portion in the state where the lateral part is fitted into the fitting portion. Therefore, the circuit board can reliably be arranged across the third housing portion and the fourth housing portion while avoiding interference between the lateral part and the circuit board.

According to the invention of claim 5, the rotating member includes the gear portion having the gear that meshes with the gear formed in the interlocking member, and the cylindrical portion extending in a cylindrical shape from the gear portion, and the magnet is mounted on the end portion of the cylindrical portion. Therefore, even when a magnet is brought close from the outside, it is possible to suppress the influence on the magnetism of the magnet that cooperates with the operation means, and the magnet can be arranged in the vicinity of the detection means, allowing the operation amount of the operation means to be detected with high accuracy.

According to the invention of claim 6, the throttle device includes the cover member mounted on the case member to cover the interlocking member and the rotating member, and the cover member is made of a magnetic material. Therefore, magnetic shielding can be performed by the cover member in addition to the magnetic shielding member.

According to the invention of claim 7, the backlash spring is constituted of the torsion spring mounted on the rotating member, and has the one end retained by the rotating member and the other end extending to the outside of the cover member and retained while being subjected to the torsional action. Therefore, it is possible to easily assemble the backlash spring and improve workability during the assembly.

According to the invention of claim 8, the throttle device includes the arc-shaped cutout portion that is formed in the cover member and allows for movement of the other end of the backlash spring when the torsional action is applied to the other end, and the retaining member that is mounted on the outside of the cover member, moves the other end of the backlash spring to apply the torsional action, and retains the other end of the backlash spring to which the torsional action is applied. Therefore, the urging force can be applied to the backlash spring from the outside of the cover member by using the retaining member, and it is possible to further improve workability during the assembly.

According to the invention of claim 9, the retaining member is fixed in the state where the retaining member applies the urging force to the backlash spring by rotating about the shaft member which is the rotating shaft of the rotating member while retaining the other end of the backlash spring. Therefore, it is possible to cause the retaining member to rotate using the shaft member which is the rotating shaft of the rotating member and to easily apply the urging force to the backlash spring.

According to the invention of claim 10, the rotating member includes the gear portion having the gear that meshes with the gear formed in the interlocking member, and the cylindrical portion extending in a cylindrical shape from the gear portion, the magnet is mounted on the end portion of the cylindrical portion, and the spring mounting recess portion that accommodates the backlash spring is formed from the side surface of the gear portion toward the cylindrical portion. Therefore, the backlash spring can be arranged close to the cover member while the magnet is disposed in the vicinity of the detection means, and the other end of the backlash spring can easily be extended to the outside of the cover member.

### Brief Description of Drawings

[Fig. 1] Fig. 1 is an exterior diagram illustrating a throttle device according to an embodiment of the present invention.
[Fig. 2] Fig. 2 is an exploded perspective view of main components of the throttle device.
[Fig. 3] Fig. 3 is a three-view diagram illustrating a throttle operation detection unit of the throttle device.
[Fig. 4] Fig. 4 is a cross-sectional view taken along line IV-IV in Fig. 3.
[Fig. 5] Fig. 5 is a plan view illustrating a state in which a cover member in the throttle operation detection unit of the throttle device is removed.
[Fig. 6] Fig. 6 is an exploded perspective view of the throttle operation detection unit.
[Fig. 7] Fig. 7 is an exploded perspective view of the throttle operation detection unit.
[Fig. 8] Fig. 8 is an exploded perspective view of some components of the throttle operation detection unit.
[Fig. 9] Fig. 9 is an exploded perspective view of some components of the throttle operation detection unit.
[Fig. 10] Fig. 10 is a three-view diagram illustrating a case member of the throttle operation detection unit.
[Fig. 11] Fig. 11 is a three-view diagram illustrating a rotating member of the throttle operation detection unit.
[Fig. 12] Fig. 12 is a three-view diagram illustrating a circuit board on which a magnetic sensor (detection means) of the throttle operation detection unit is formed.
[Fig. 13] Fig. 13 is a two-view diagram illustrating the cover member of the throttle operation detection unit.
[Fig. 14] Fig. 14 is a two-view diagram illustrating a lateral part of a magnetic shielding member in the throttle operation detection unit.
[Fig. 15] Fig. 15 is a three-view diagram illustrating a bottom part of the magnetic shielding member in the throttle operation detection unit.
[Fig. 16] Fig. 16 is a three-view diagram illustrating a retaining member in the throttle operation detection unit.
[Fig. 17] Fig. 17 is a schematic diagram illustrating a positional relationship between the magnetic sensor and the lateral part of the magnetic shielding member in the throttle operation detection unit.
[Fig. 18] Fig. 18 shows schematic diagrams illustrating an action of the retaining member in the throttle operation detection unit.

### Description of Embodiments

Hereinafter, an embodiment of the present invention will be described in detail with reference to the drawings.

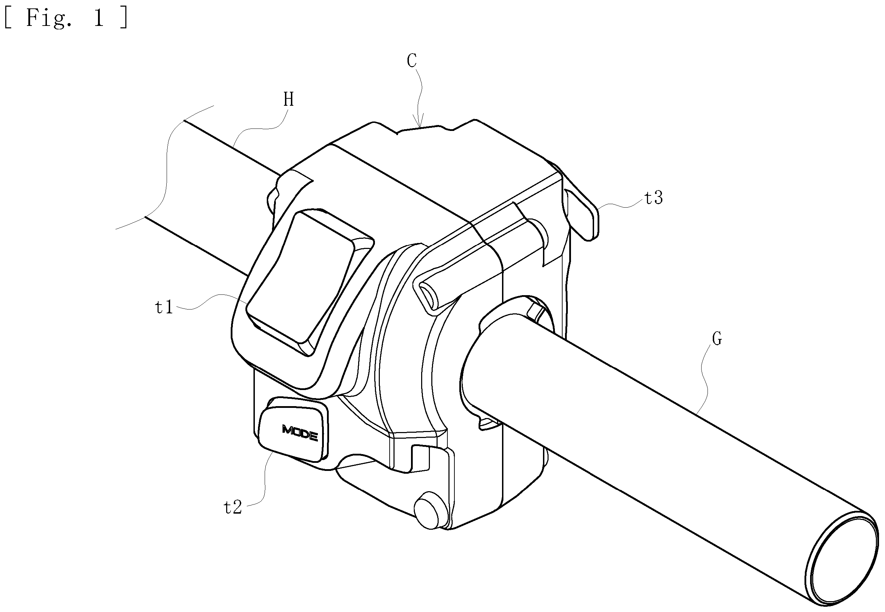

A throttle device according to the present embodiment is configured to detect a rotation operation angle (operation amount) of a throttle grip (operation means) mounted on a handlebar H of a motorcycle, and transmit the detected signal to an electronic control device such as an ECU installed on the motorcycle to control a drive source of the vehicle. As illustrated in Figs. 1 to 4, the throttle device includes a switch case C fixed to the handlebar H of the vehicle, a throttle operation detection unit Y mounted inside the switch case C, and operation parts t1 to t3 mounted on the switch case C that allow various electrical components installed on the vehicle to be operated.

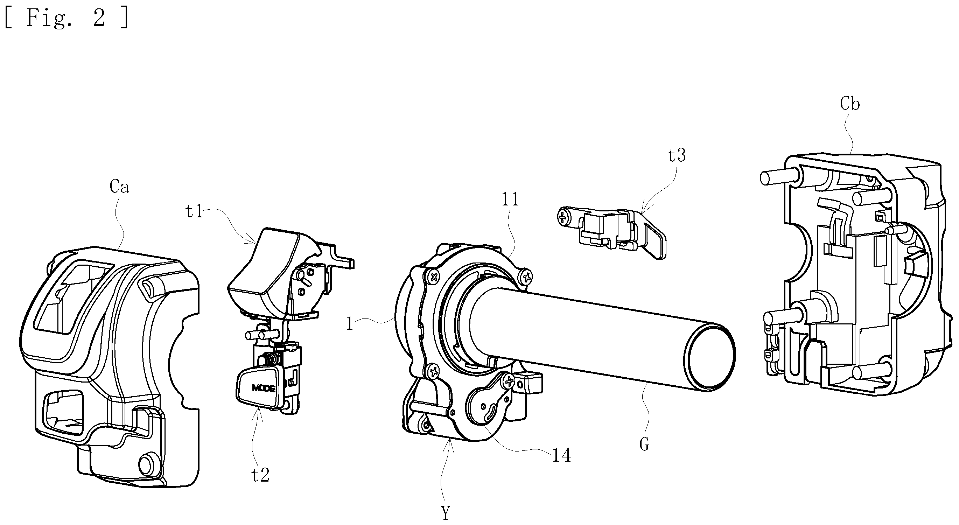

The switch case C is made by molding a predetermined material, and as illustrated in Fig. 2, is constructed by assembling a front-side switch case Ca and a rear-side switch case Cb, each of which has a half-split shape, in a mating manner. Openings are formed at predetermined positions of the switch case C, and operation knobs constituting the operation parts (t1 to t3) are mounted in the respective openings, making it possible to operate any electrical component installed on the vehicle.

More specifically, the operation part t1 has a seesaw-type operation knob that can be swung and a switch part that is electrically turned on and off in response to operation of the operation knob, the operation part t2 has a button-type operation knob that can be pressed and a switch part that is electrically turned on and off in response to operation of the operation knob, and the operation part t3 has a seesaw-type operation knob that can be swung and a switch part that is electrically turned on and off in response to operation of the operation knob.

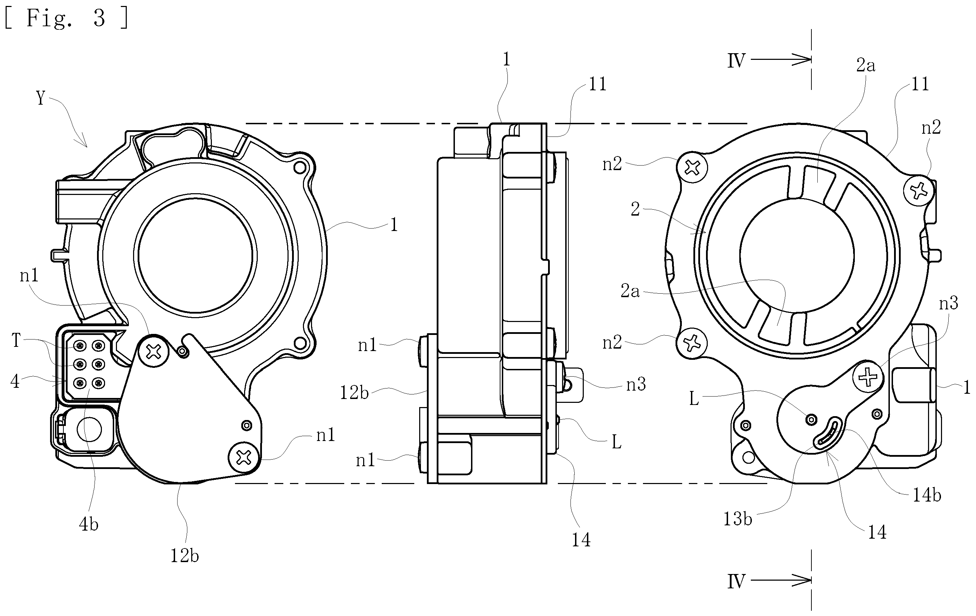

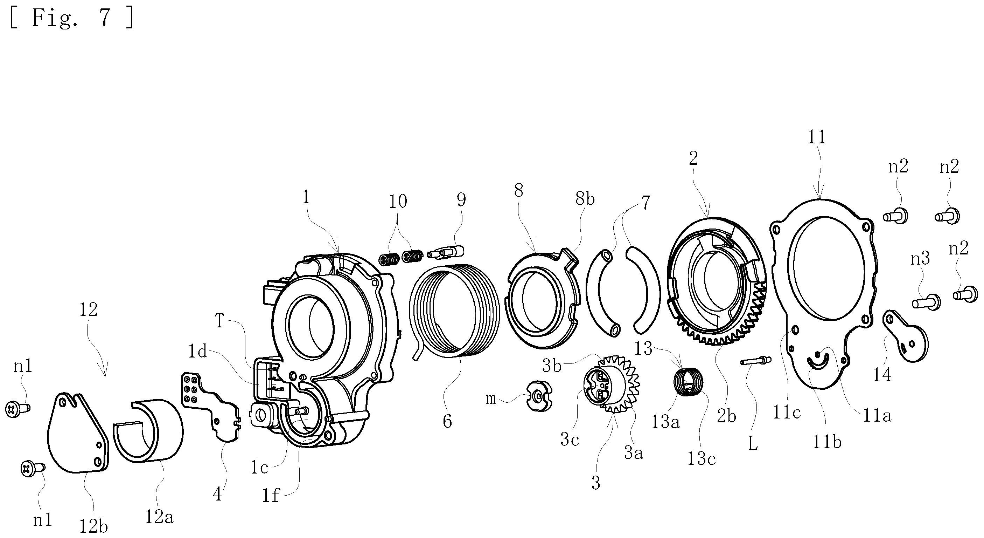

As illustrated in Figs. 3 to 9, the throttle operation detection unit Y includes a throttle grip G (operation means), an interlocking member 2, a rotating member 3 on which a magnet m is mounted, a magnetic sensor 5 (detection means) formed on a circuit board 4, a case member 1 that rotatably holds the interlocking member 2 and the rotating member 3, a forward rotation return spring 6 and a backward rotation return spring 7, a friction-applying member 9, a cover member 11, a magnetic shielding member 12, a backlash spring 13, and a retaining member 14.

The throttle grip G is mounted on an end (right-side end portion) of the handlebar H of the vehicle, allows a driver to perform throttle operation by rotating the throttle grip G about an axis while gripping the throttle grip G, and is arranged at a position adjacent to the switch case C. Instead of the throttle grip G, other operation means by which the driver can perform throttle operation may be used, and it is possible to use, for example, a rocking lever or a slide switch that can be operated with any operation amount.

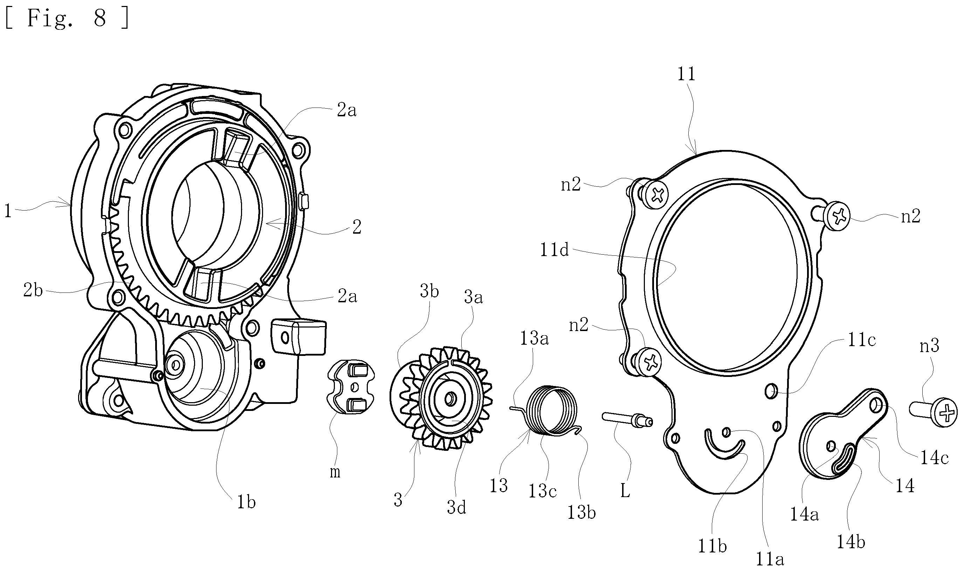

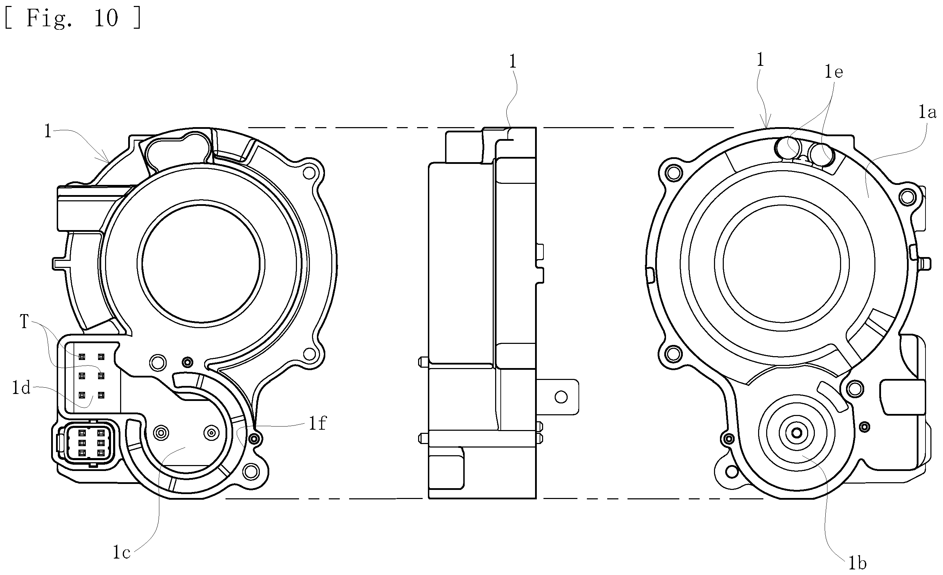

The case member 1 rotatably holds the interlocking member 2 and the rotating member 3, and as illustrated in Figs. 8 to 10, has a first housing portion 1a on which the interlocking member 2 is rotatably mounted, a second housing portion 1b on which the rotating member 3 is rotatably mounted, a third housing portion 1c on which the magnetic sensor 5 is mounted, a fourth housing portion 1d formed continuously with the third housing portion 1c, a fifth housing portion 1e on which the friction-applying member 9 and a coil spring 10 are mounted, and a fitting portion 1f.

Specifically, the first housing portion 1a, the second housing portion 1b, and the fifth housing portion 1e are formed on one surface of the case member 1, and the interlocking member 2, the rotating member 3, and the friction-applying member 9 and the coil spring 10 are mounted on the respective housing portions. It is configured such that, when the interlocking member 2 accommodated in the first housing portion 1a rotates in conjunction with the rotation operation of the throttle grip G, the rotating member 3 accommodated in the second housing portion 1b rotates in conjunction with the rotation of the interlocking member 2, and the friction-applying member 9 urged by the coil spring 10 comes into contact with the interlocking member 2 and slides, thereby applying friction (frictional force) during operation on the throttle grip G.

In addition, on the other surface of the case member 1, the third housing portion 1c and the fourth housing portion 1d are continuously formed, and the circuit board 4 is mounted across these continuously formed third housing portion 1c and fourth housing portion 1d. The circuit board 4 according to the present embodiment is constituted of a printed circuit board on which a predetermined electrical circuit is formed, the magnetic sensor 5 is mounted on the section of the circuit board 4 located in the third housing portion 1c, and connection terminals T extending from the case member 1 can be formed to be inserted into and protrude through hole portions 4c of the circuit board 4 located in the fourth housing portion 1d.

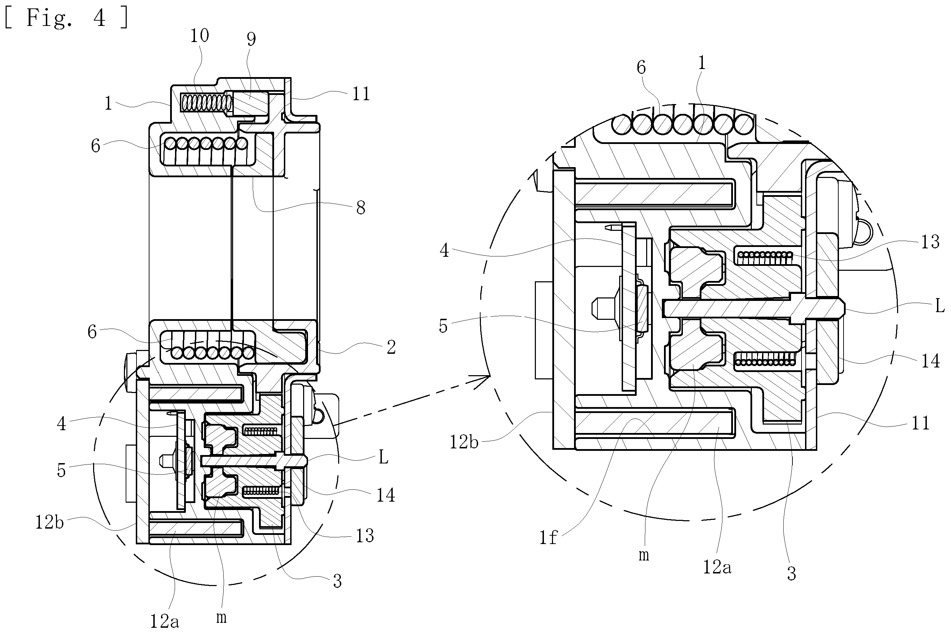

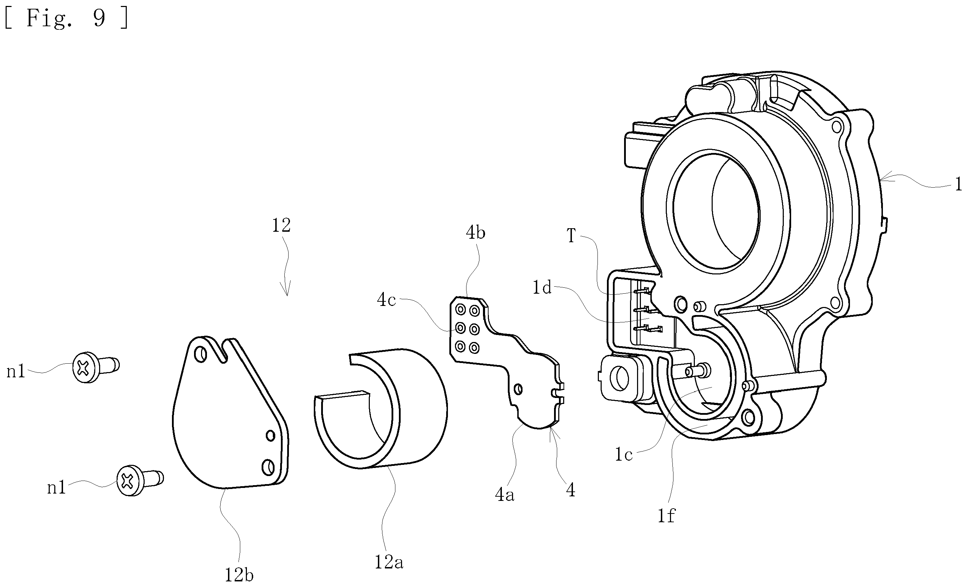

Further, as illustrated in Fig. 9, the arc-shaped fitting portion 1f is formed lateral to the third housing portion 1c in the case member 1, and the fitting portion 1f can be fitted with a lateral part 12a of the magnetic shielding member 12. Then, when the lateral part 12a is fitted into the fitting portion 1f, as illustrated in Fig. 4, the lateral part 12a is located lateral to the magnet m and the magnetic sensor 5, making it possible to shield against external magnetism.

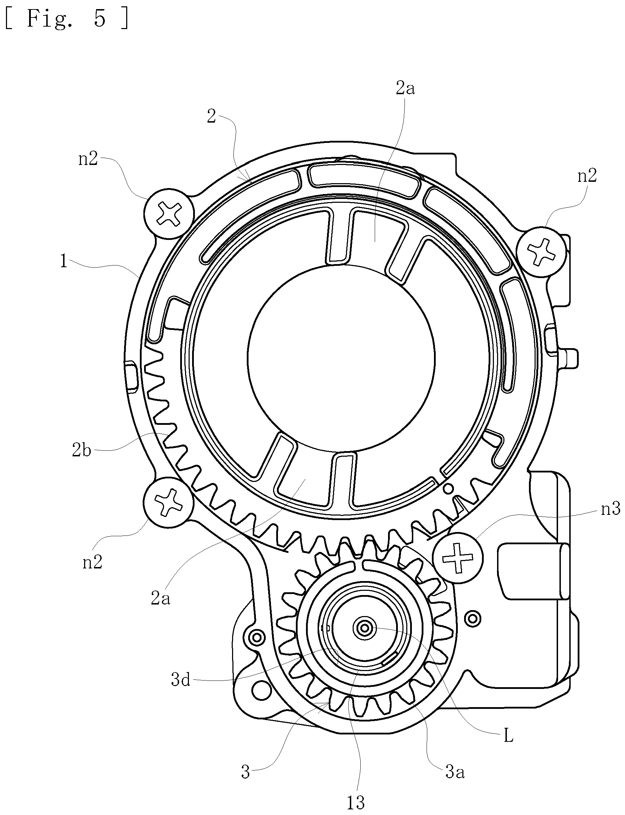

The interlocking member 2 is rotatable in conjunction with the throttle grip G, and is rotatably mounted on the first housing portion 1a of the case member 1. As illustrated in Fig. 5, the interlocking member 2 according to the present embodiment includes an engaging portion 2a that can engage and retain a protrusion (not illustrated) formed at the base end of the throttle grip G, and a gear portion 2b formed over a predetermined range. The interlocking member 2 can be rotated in conjunction with the rotation operation of the throttle grip G by the driver.

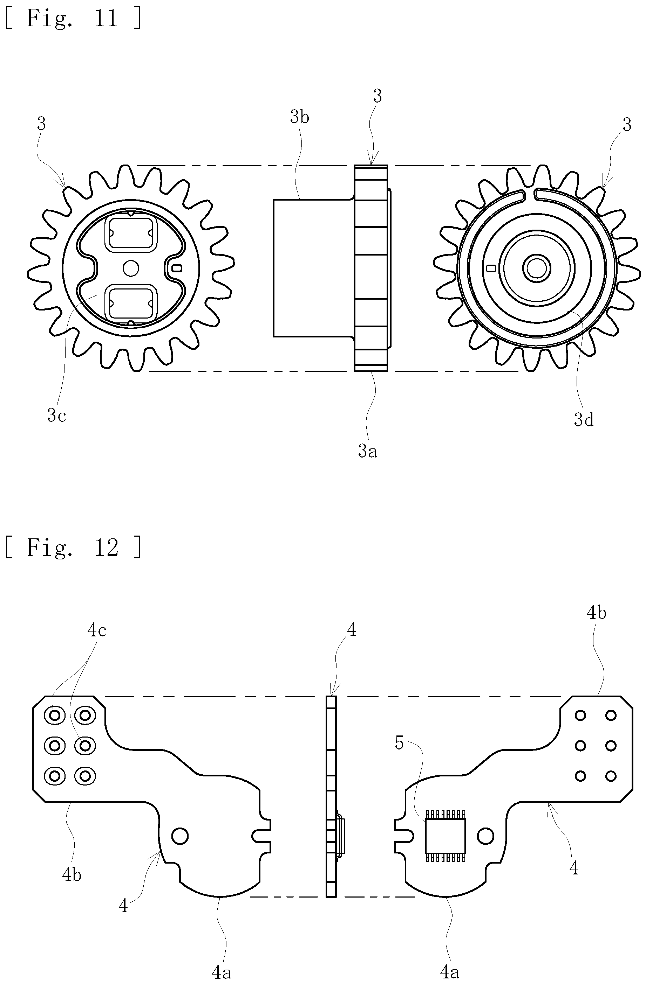

The rotating member 3 is configured to rotate together with the magnet m in accordance with a rotation angle of the interlocking member 2, and is rotatably mounted on the second housing portion 1b of the case member 1. As illustrated in Figs. 8 and 11, the rotating member 3 according to the present embodiment has a gear portion 3a that meshes with the gear portion 2b of the interlocking member 2, a cylindrical portion 3b that extends in a cylindrical shape from the gear portion 3a, a magnet mounting recess portion 3c that is formed at the end portion of the cylindrical portion 3b and on which the magnet m is mounted, and a spring mounting recess portion 3d that can accommodate the backlash spring 13.

The forward rotation return spring 6 is constituted of a torsion coil spring, and is a return spring that urges the interlocking member 2 toward the initial position when the throttle grip G rotates forward. Specifically, the forward rotation return spring 6 has one end retained by the case member 1, and the other end retained by and assembled to the interlocking member 2. When the throttle grip G is rotated forward, the interlocking member 2 rotates against an urging force of the forward rotation return spring 6, and thus the urging force is transmitted to the throttle grip G and a force acts to return the throttle grip G to the initial position.

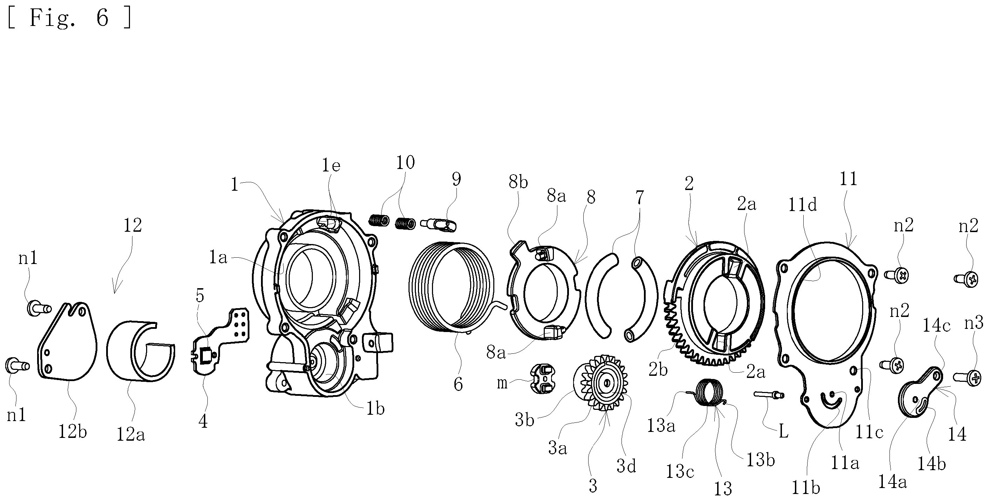

The backward rotation return spring 7 is mounted on the interlocking member 2, is constituted of a pair of coil springs with one end abutting against and mounted on a spring receiving portion 8a formed in a receiving member 8 (see Fig. 6), and is configured to urge the interlocking member 2 toward the initial position when the throttle grip G rotates backward. Specifically, the backward rotation return spring 7 functions as follows. When the throttle grip G is rotated backward, a protruding portion 8b of the receiving member 8 is retained by a predetermined section of the case member 1, and thus the interlocking member 2 rotates while the receiving member 8 stops. As a result, the interlocking member 2 rotates against an urging force of the backward rotation return spring 7, and thus the urging force is transmitted to the throttle grip G and the force acts to return the throttle grip G to the initial position.

The magnetic sensor 5 (detection means) is configured to detect a magnetic change (change in direction of magnetic field) of the magnet m associated with the rotation of the rotating member 3 to detect a rotation angle of the rotating member 3, and is capable of detecting a rotation angle of the throttle grip G. Specifically, the magnetic sensor 5 can obtain an output voltage corresponding to a change in magnetic field (change in magnetic flux density) of the magnet m, and is constituted of, for example, a Hall element which is a magnetic sensor that utilizes the Hall effect (specifically, a linear Hall IC that can obtain an output voltage proportional to the magnetic field (magnetic flux density) of the magnet m).

As illustrated in Fig. 12, the circuit board 4 is integrally formed with a sensor area 4a where the magnetic sensor 5 is mounted and a connection terminal area 4b where the hole portions 4c are formed through which the connection terminals T protrude. When the circuit board 4 is mounted on the case member 1, the sensor area 4a is located in the third housing portion 1c and the connection terminal area 4b is located in the fourth housing portion 1d. The connection terminals T are electrically connected to wiring extending from a vehicle side, whereby the detected value of the magnetic sensor 5 can be transmitted to the vehicle side.

As a result, when the throttle grip G rotates and the interlocking member 2 and the rotating member 3 rotate by the corresponding rotation angle, an output signal of the magnetic sensor 5 increases or decreases due to the change in the magnetic field generated from the magnet m mounted on the rotating member 3, and therefore the rotation operation angle of the throttle grip G can be detected based on the output signal. The detected signal is sent via the wiring connected to the connection terminals T of the circuit board 4 to the ECU provided in the motorcycle, and control of the drive source (engine or motor) based on the detected signal (output control based on the rotation angle of the throttle grip G) is performed.

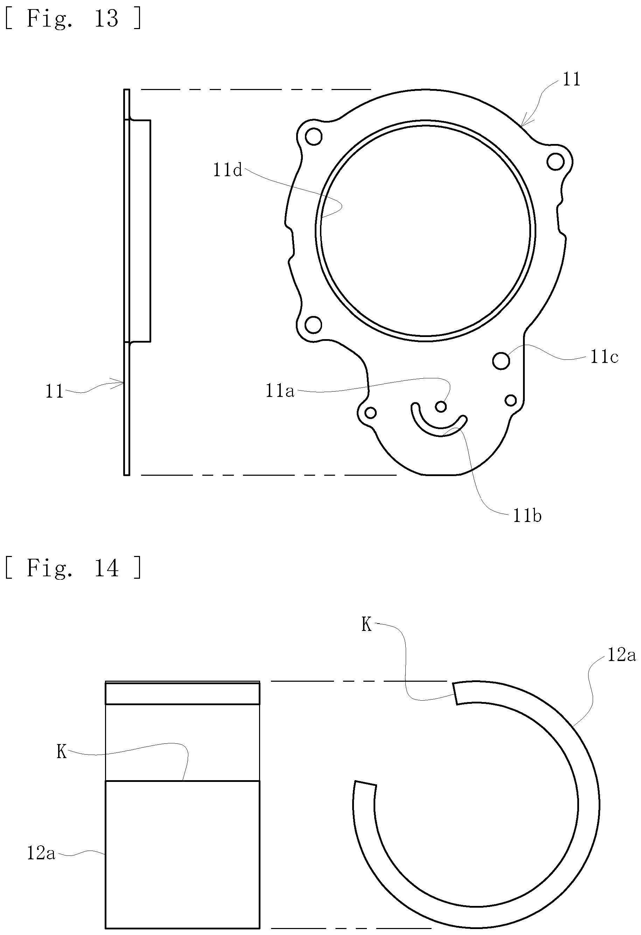

The cover member 11 is constituted of a plate-shaped member that is mounted on one surface of the case member 1 and covers the interlocking member 2 and the rotating member 3, and as illustrated in Fig. 13, has an insertion hole 11a into which a shaft member L can be inserted, an arc-shaped cutout portion 11b into which the other end 13b of the backlash spring 13 is inserted and which allows for movement of the other end 13b of the backlash spring 13 when a torsional action is applied to the other end 13b, and a screw hole 11c into which a screw n3 that fixes the retaining member 14 can be inserted.

The backlash spring 13 is configured to apply an urging force in a rotation direction of the rotating member 3 to reduce backlash between the interlocking member 2 and the rotating member 3, and as illustrated in Figs. 6 to 8, is constituted of a torsion spring having one end 13a and the other end 13b formed at both ends of a coil portion 13c. The backlash spring 13 according to the present embodiment is accommodated in the spring mounting recess portion 3d of the rotating member 3, with the one end 13a being retained by the rotating member 3 and the other end 13b extending to the outside of the cover member 11 through the cutout portion 11b and being retained by the retaining member 14 while being subjected to the torsional action.

Specifically, the gear portion 3a of the rotating member 3 is meshed with the gear portion 2b of the interlocking member 2, and the rotating member 3 and the interlocking member 2 are assembled to the case member 1. Thereafter, while the backlash spring 13 is accommodated in the spring mounting recess portion 3d of the rotating member 3, the one end 13a is retained by the rotating member 3. Then, after the shaft member L which is a rotating shaft of the rotating member 3 is assembled to the case member 1, the distal end side of the shaft member L is inserted into the insertion hole 11a of the cover member 11 and the other end 13b of the backlash spring 13 is inserted into the cutout portion 11b, and the cover member 11 is fixed to the case member 1 with screws n2. At this time, the backlash spring 13 is in a free state where no urging force is applied, and therefore the urging force is applied by the retaining member 14.

The retaining member 14 is mounted on the outside of the cover member 11, and is configured to move the other end 13b of the backlash spring 13 to apply the torsional action, and retain the other end 13b of the backlash spring 13 to which the torsional action is applied. The retaining member 14 according to the present embodiment is rotatable about the shaft member L which is the rotating shaft of the rotating member 3 while retaining the other end 13b of the backlash spring 13, and is fixed at a predetermined position of the cover member 11. Specifically, as illustrated in Figs. 6 to 8 and 16, the retaining member 14 has a center hole 14a into which the distal end of the shaft member L can be inserted, a retaining groove 14b in which the other end 13b of the backlash spring 13 can be retained, and a screw hole 14c into which the screw n3 can be inserted.

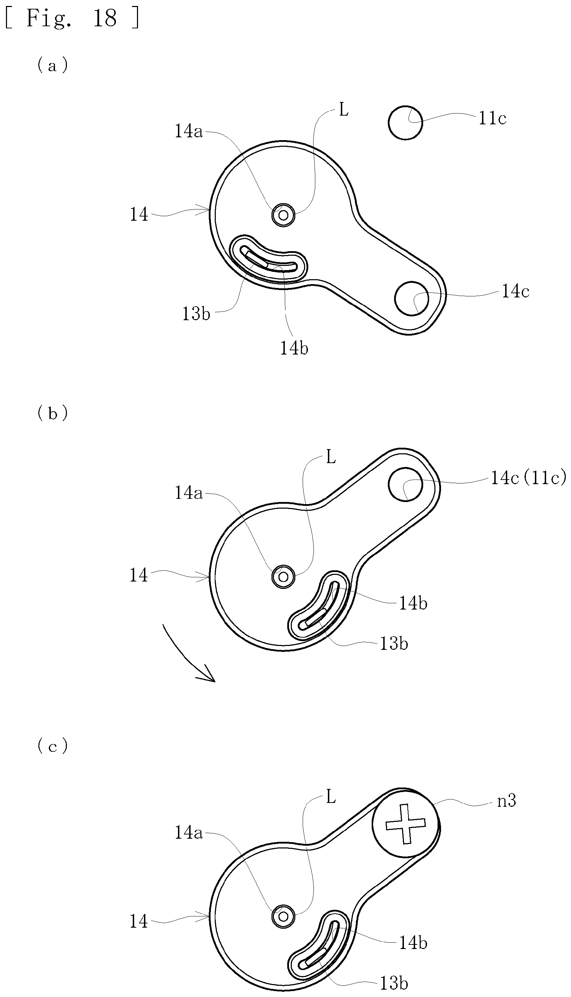

Therefore, after the cover member 11 is mounted on the case member 1, as illustrated in (a) of Fig. 18, the distal end of the shaft member L protruding from the insertion hole 11a is inserted into the center hole 14a of the retaining member 14, and the other end 13b of the backlash spring 13 (in the free state where no urging force is applied) protruding from the cutout portion 11b is retained by the retaining groove 14b of the retaining member 14. Then, as illustrated in (b) of Fig. 18, when the retaining member 14 is rotated about the shaft member L, the other end 13b retained by the retaining groove 14b moves in an arc, and the torsional action is applied to the backlash spring 13.

Thereafter, as illustrated in (c) of Fig. 18, the retaining member 14 is rotated until the screw hole 14c of the retaining member 14 is aligned with the screw hole 11c of the cover member 11, and the screw n3 is inserted into the screw holes 11c and 14c and screwed together, thereby making it possible to fix the retaining member 14 to the cover member 11. In this way, the torsional action is exerted on the backlash spring 13 by rotating and fixing the retaining member 14, and the state in which the urging force is applied to the rotating member 3 can be maintained.

In this way, in the backlash spring 13, while the one end 13a is retained by the rotating member 3, the other end 13b is retained by the retaining member 14 while being subjected to the torsional action. Therefore, the urging force can be applied in the rotation direction of the rotating member 3, and with that urging force, it is possible to reduce the backlash between the gear portion 3a of the rotating member 3 and the gear portion 2b of the interlocking member 2.

The magnetic shielding member 12 is made of a magnetic material (a ferromagnetic material such as iron), is located around the magnet m and the magnetic sensor 5, and is capable of shielding against magnetism (capable of magnetic shielding) from the outside (outside the throttle device). As illustrated in Figs. 6, 7 and 9, the magnetic shielding member 12 includes the lateral part 12a that is open at both ends and laterally covers the magnet m and the magnetic sensor 5, and a plate-shaped bottom part 12b that covers the bottom-side opening of the lateral part 12a.

The lateral part 12a is obtained, for example, by performing roll processing (processing to fit the outer circumferential surface of a roll) on the plate-shaped ferromagnetic material, and as illustrated in Fig. 14, is made of a cylindrical member having a C-shape in plan view, which is bent in an arc shape with a predetermined curvature as a whole, and a cutout K formed in part of the lateral side thereof with both ends (left and right ends in the same figure) open. As described above, the lateral part 12a is fitted into the fitting portion 1f of the case member 1, is located lateral to the magnet m and the magnetic sensor 5, and is capable of shielding against the external magnetism.

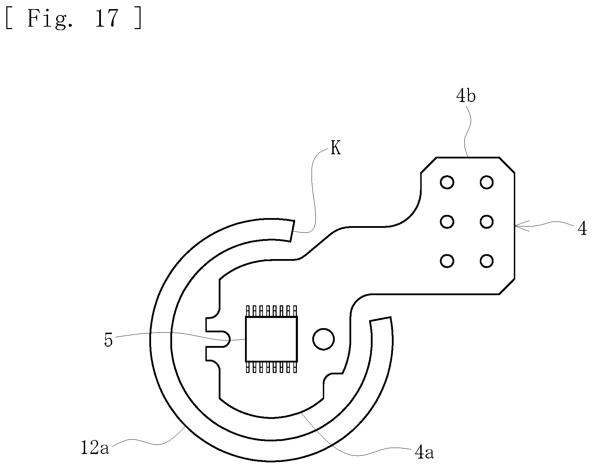

Here, the lateral part 12a is made of the cylindrical member (C-shaped member in plan view) with the cutout K formed in part of the lateral side thereof, and as illustrated in Fig. 17, is configured such that the cutout K is located at a boundary between the third housing portion 1c and the fourth housing portion 1d in the state where the lateral part 12a is fitted into the fitting portion 1f of the case member 1. The lateral part 12a can thus be arranged without separating the sensor area 4a and the connection terminal area 4b of the circuit board 4, and the entire circuit board 4 can be mounted on the case member 1.

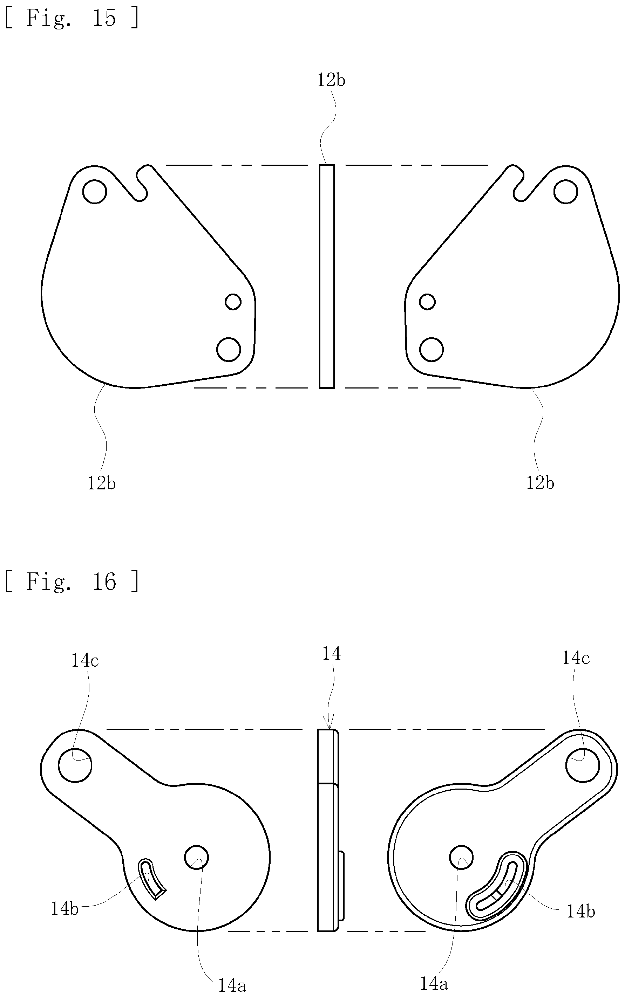

The bottom part 12b is made of the plate-shaped ferromagnetic material as illustrated in Fig. 15, and is configured to be mounted on the case member 1 with screws n1 as illustrated in Fig. 3. When the bottom part 12b is mounted on the case member 1, it is configured to cover one open end of the lateral part 12a as illustrated in Fig. 4, whereby the magnet m and the magnetic sensor 5 are surrounded by the lateral part 12a and the bottom part 12b.

According to the above embodiment, the magnetic shielding member 12 has the cylindrical lateral part 12a that is open at both ends and laterally surrounds the magnet m and the magnetic sensor 5, and the plate-shaped bottom part 12b that closes at least one open end of the lateral part 12a. Therefore, even when a magnet is brought close from the outside, it is possible to suppress an influence on magnetism of the magnet m that cooperates with the throttle grip G (operation means), and a deep drawing process and the like are not required, thereby making it possible to reduce manufacturing costs for magnetic shielding.

Also, the cover member 11 may be made of the magnetic material (the ferromagnetic material such as iron, similar to the magnetic shielding member 12). If the cover member 11 is thus made of the magnetic material, magnetic shielding can be performed by the cover member 11 in addition to the magnetic shielding member 12. In this case, the lateral part 12a is located lateral to the magnet m and the magnetic sensor 5, and the bottom part 12b and the cover member 11 having the magnetic shielding effect are located above and below, thereby making it possible to more reliably perform magnetic shielding.

Further, the case member 1 according to the present embodiment includes the first housing portion 1a on which the interlocking member 2 is rotatably mounted, the second housing portion 1b on which the rotating member 3 is rotatably mounted, and the third housing portion 1c on which the magnetic sensor 5 (detection means) is mounted, and the fitting portion 1f configured to allow the lateral part 12a of the magnetic shielding member 12 to be fitted thereinto is formed at a position lateral to the third housing portion 1c. Therefore, it is possible to improve each of positioning accuracy between the magnetic sensor 5 and the lateral part 12a of the magnetic shielding member 12, and positioning accuracy between the magnetic sensor 5 and the magnet m of the rotating member 3.

Furthermore, the case member 1 according to the present embodiment includes the fourth housing portion 1d formed continuously with the third housing portion 1c, the circuit board 4 on which the magnetic sensor 5 is formed is mounted across the third housing portion 1c and the fourth housing portion 1d, and the connection terminals T are formed in the section of the circuit board 4 located in the fourth housing portion 1d. Therefore, the circuit board 4 can be mounted on the case member 1 while avoiding interference with the magnetic shielding member 12.

In addition, the lateral part 12a of the magnetic shielding member 12 is made of the cylindrical member with the cutout K formed in part of the lateral side thereof, and the cutout K is located at the boundary between the third housing portion 1c and the fourth housing portion 1d in the state where the lateral part 12a is fitted into the fitting portion 1f. Therefore, the circuit board 4 can reliably be arranged across the third housing portion 1c and the fourth housing portion 1d while avoiding interference between the lateral part 12a and the circuit board 4.

Moreover, the rotating member 3 according to the present embodiment includes the gear portion 3a having the gear that meshes with the gear (gear portion 2b) formed in the interlocking member 2, and the cylindrical portion 3b extending in a cylindrical shape from the gear portion 3a, and the magnet m is mounted on the end portion of the cylindrical portion 3b. Therefore, even when a magnet is brought close from the outside, it is possible to suppress the influence on the magnetism of the magnet m that cooperates with the throttle grip G (operation means), and the magnet m can be arranged in the vicinity of the magnetic sensor 5 (detection means), allowing the operation amount (rotation operation angle) of the throttle grip G (operation means) to be detected with high accuracy.

According to the above embodiment, the backlash spring 13 is constituted of the torsion spring mounted on the rotating member 3, and has the one end 13a retained by the rotating member 3 and the other end 13b extending to the outside of the cover member 11 and retained while being subjected to the torsional action. Therefore, the backlash spring 13 can easily be assembled by applying the urging force to the backlash spring 13 after the cover member 11 is assembled to the case member 1, making it possible to improve workability during the assembly.

In addition, the throttle device according to the present embodiment includes the arc-shaped cutout portion 11b that is formed in the cover member 11 and allows for movement of the other end 13b of the backlash spring 13 when the torsional action is applied to the other end 13b, and the retaining member 14 that is mounted on the outside of the cover member 11, moves the other end 13b of the backlash spring 13 to apply the torsional action, and retains the other end 13b of the backlash spring 13 to which the torsional action is applied. Therefore, the urging force can be applied to the backlash spring 13 from the outside of the cover member 11 by using the retaining member 14, and it is possible to further improve workability during the assembly.

Further, the retaining member 14 according to the present embodiment is fixed in the state where the retaining member 14 applies the urging force to the backlash spring 13 by rotating about the shaft member L which is the rotating shaft of the rotating member 3 while retaining the other end 13b of the backlash spring 13. Therefore, it is possible to cause the retaining member 14 to rotate using the shaft member L which is the rotating shaft of the rotating member 3 and to easily apply the urging force to the backlash spring 13.

Furthermore, the rotating member 3 according to the present embodiment includes the gear portion 3a having the gear that meshes with the gear formed in the interlocking member 2, and the cylindrical portion 3b extending in a cylindrical shape from the gear portion 3a, the magnet m is mounted on the end portion of the cylindrical portion 3b, and the spring mounting recess portion 3d that accommodates the backlash spring 13 is formed from the side surface of the gear portion 3a toward the cylindrical portion 3b. Therefore, the backlash spring 13 can be arranged close to the cover member 11 while the magnet m is disposed in the vicinity of the magnetic sensor 5, and the other end 13b of the backlash spring 13 can easily be extended to the outside of the cover member 11.

Although the present embodiment has been described above, the present invention is not limited thereto. For example, in the magnetic shielding member 12 according to the present embodiment, the bottom part 12b is arranged to cover one open end of the lateral part 12a, but it may be configured such that both open ends of the lateral part 12a are respectively covered with the bottom parts 12b. In addition, the lateral part 12a of the magnetic shielding member 12 according to the present embodiment has a C-shape in plan view with the cutout K in part of the lateral side thereof, but the lateral part 12a may also be made of a cylindrical member having an elliptical shape, a rectangular shape, or an irregular shape in plan view. Further, in the circuit board 4 according to the present embodiment, electrical connection to the wiring extending from the vehicle side is made via the connection terminals T, but instead of the connection terminals T, a lead wire may be connected to the circuit board 4, the lead wire may be led out from the case member, and the lead wire may be electrically connected to the wiring extending from the vehicle side, and the other end 13b of the backlash spring 13 may be retained by other means different from the retaining member 14.

In the present embodiment, the throttle device is mounted on the handlebar of the motorcycle, but it may also be mounted on other vehicles having handlebars (for example, ATVs, snowmobiles, etc.). The throttle device can also be applied to vehicles using internal combustion engines such as engines as drive sources, and electric vehicles using motors or the like as drive sources.

### Industrial Applicability

The present invention can also be applied to, for example, throttle devices having different appearance shapes or throttle devices to which other functions are added, as long as the gist is similar to that of the present invention.

### Reference Signs List

- 1: case member
- 1a: first housing portion
- 1b: second housing portion
- 1c: third housing portion
- 1d: fourth housing portion
- 1e: fifth housing portion
- 1f: fitting portion
- 2: interlocking member
- 2a: engaging portion
- 2b: gear portion
- 3: rotating member
- 3a: gear portion
- 3b: cylindrical portion
- 3c: magnet mounting recess portion
- 3d: spring mounting recess portion
- 4: circuit board
- 4a: sensor area
- 4b: connection terminal area
- 4c: hole portion
- 5: magnetic sensor (detection means)
- 6: forward rotation return spring
- 7: backward rotation return spring
- 8: receiving member
- 8a: spring receiving portion
- 8b: protruding portion
- 9: friction-applying member
- 10: coil spring
- 11: cover member
- 11a: insertion hole
- 11b: cutout portion
- 11c: screw hole
- 11d: opening portion
- 12: magnetic shielding member
- 12a: lateral part
- 12b: bottom part
- 13: backlash spring
- 13a: one end
- 13b: other end
- 13c: coil portion
- 14: retaining member
- 14a: center hole
- 14b: retaining groove
- 14c: screw hole
- G: throttle grip (operation means)
- m: magnet
- C: switch case
- Ca: front-side switch case
- Cb: rear-side switch case
- t1 to t3: operation part
- L: shaft member
- T: connection terminal
- Y: throttle operation detection unit

## Claims

1. A throttle device comprising:
operation means capable of throttle operation;
an interlocking member that rotates in conjunction with the operation means;
a rotating member on which a magnet is mounted and that rotates together with the magnet in accordance with a rotation angle of the interlocking member;
detection means configured to detect a magnetic change of the magnet associated with the rotation of the rotating member to detect a rotation angle of the rotating member;
a case member that rotatably holds the interlocking member and the rotating member; and
a magnetic shielding member made of a magnetic material, located around the magnet and the detection means, and capable of shielding against external magnetism,
the throttle device being configured to detect an operation amount of the operation means based on the rotation angle of the rotating member detected by the detection means, and control a drive source of a vehicle,
wherein the magnetic shielding member has a cylindrical lateral part that is open at both ends and laterally surrounds the magnet and the detection means, and a plate-shaped bottom part that closes at least one open end of the lateral part.

2. The throttle device according to claim 1, wherein the case member includes a first housing portion on which the interlocking member is rotatably mounted, a second housing portion on which the rotating member is rotatably mounted, and a third housing portion on which the detection means is mounted, and a fitting portion configured to allow the lateral part of the magnetic shielding member to be fitted thereinto is formed at a position lateral to the third housing portion.

3. The throttle device according to claim 2, wherein the case member includes a fourth housing portion formed continuously with the third housing portion, a circuit board on which the detection means is formed is mounted across the third housing portion and the fourth housing portion, and a connection terminal is formed in a section of the circuit board located in the fourth housing portion.

4. The throttle device according to claim 3, wherein the lateral part of the magnetic shielding member is made of a cylindrical member with a cutout formed in part of a lateral side thereof, and the cutout is located at a boundary between the third housing portion and the fourth housing portion in a state where the lateral part is fitted into the fitting portion.

5. The throttle device according to claim 1, wherein the rotating member includes a gear portion having a gear that meshes with a gear formed in the interlocking member, and a cylindrical portion extending in a cylindrical shape from the gear portion, and the magnet is mounted on an end portion of the cylindrical portion.

6. The throttle device according to claim 1, comprising a cover member mounted on the case member to cover the interlocking member and the rotating member, wherein the cover member is made of a magnetic material.

7. The throttle device according to claim 1, comprising:
a cover member mounted on the case member to cover the interlocking member and the rotating member; and
a backlash spring that applies an urging force in a rotation direction of the rotating member to reduce backlash between the interlocking member and the rotating member,
wherein the backlash spring is constituted of a torsion spring mounted on the rotating member, and has one end retained by the rotating member and another end extending to an outside of the cover member and retained while being subjected to a torsional action.

8. The throttle device according to claim 7, comprising:
an arc-shaped cutout portion that is formed in the cover member and allows for movement of the other end of the backlash spring when the torsional action is applied to the other end; and
a retaining member that is mounted on the outside of the cover member, moves the other end of the backlash spring to apply the torsional action, and retains the other end of the backlash spring to which the torsional action is applied.

9. The throttle device according to claim 8, wherein the retaining member is fixed in a state where the retaining member applies an urging force to the backlash spring by rotating about a shaft member which is a rotating shaft of the rotating member while retaining the other end of the backlash spring.

10. The throttle device according to claim 7, wherein the rotating member includes a gear portion having a gear that meshes with a gear formed in the interlocking member, and a cylindrical portion extending in a cylindrical shape from the gear portion, the magnet is mounted on an end portion of the cylindrical portion, and a spring mounting recess portion that accommodates the backlash spring is formed from a side surface of the gear portion toward the cylindrical portion.
